# EUROPÄISCHE PATENTSCHRIFT

(11) **EP 2 919 342 B1**
(45) Veröffentlichungstag und Bekanntmachung des Hinweises auf die Patenterteilung: **05.10.2016**
(21) Anmeldenummer: 14305352.8
(22) Anmeldetag: 11.03.2014
(51) Int. Cl.: H02G 3/08, H02G 3/12

(54) **Geräteeinbaudose für Kabelkanäle**
Device installation socket for cable conduits
Prise intégrée d'appareil pour canaux de câbles

(43) Veröffentlichungstag der Anmeldung: 16.09.2015
(73) Patentinhaber: Tehalit GmbH, 67716 Heltersberg (DE)
(72) Erfinder: Mattfeldt, Christian, 66484 SCHMITSHAUSEN (DE)
(74) Vertreter: Nuss, Laurent

(56) Entgegenhaltungen:
- EP-A1- 0 971 466
- EP-A1- 2 149 952
- CH-B1- 698 927
- DE-A1- 19 814 567
- FR-A1- 2 799 896

## Beschreibung

Es sind bereits Geräteeinbaudosen für Kabelkanäle bekannt, wie zum Beispiel in EP 971466, die es ermöglichen in einem Kabelkanal eingerastet zu werden und dort mit den zu montierenden Elektro-Einbaugeräte bestückt zu werden. Diese können entweder vertikal oder horizontal (relativ zum Fußboden) montiert werden.

Es werden folglich in der Regel zwei Dosenarten benötigt, was umständlich ist. Dosen die für beide Montagefälle einsetzbar sind, weisen hingegen unnötige Wände oder Wandabschnitte z. B. Stege auf die u. a. bei der Verkabelung im Wege stehen und dem Monteur die Arbeit erschweren. Außerdem ist ein breiteres Sortiment kostenungünstig.

Der vorliegenden Erfindung liegt daher die Aufgabe zugrunde, eine Geräteeinbaudose anzugeben, die es erlaubt, sowohl bei einer horizontalen als auch bei einer vertikalen Montage in einem Kabelkanal, dem Monteur stets einen optimalen Zugang zum Inneren der Dose zu gewährleisten um Ihm den elektrischen Anschluß zu erleichtern, so daß er dann einfach das Elektro-Einbaugerät auf die besagte Dose auf der Oberseite des Gehäuses der Dose fixieren, z. B. festschrauben kann.

Produktions- und Lagerkosten werden durch ein einziges Modell für zwei Anwendungen ebenfalls reduziert während gleichzeitig die Montage vereinfacht wird.

Diese Aufgabe wird gelöst durch eine Geräteeinbaudose mit den Merkmalen des Anspruchs 1.

Weitere vorteilhafte Merkmale werden in den Unteransprüchen angegeben.

Somit betrifft die Erfindung eine Geräteeinbaudose für Kabelkanäle, im wesentlichen umfassend
- ein oben offenes Gehäuse mit einem Boden und drei Seitenwänden die zusammen, von oben gesehen eine C-, J- oder U-artige Form aufweisen und welche jeweils Mittel zum Befestigen eines Elektro-Einbaugerätes besitzen,
- mindestens eine, vorzugsweise zwei Kabeleinführungsöffnungen,
- und mindestens eine, am Boden außenseitig angebrachte Haltevorrichtung zur Befestigung des Gehäuses am Kabelkanal,
dadurch gekennzeichnet, dass
- die vierte Seitenwand, als ein zum Inneren des Gehäuses hin, am Boden schwenkbar angebrachter, umklappbarer Steg ausgebildet ist, der an seinem oberen freien Ende mindestens ein Mittel aufweist, das zumindest mit einem, auf der gegenüberliegenden Seitenwand liegenden Mittel zur besagten Befestigung kooperieren kann wenn der Steg senkrecht vom Boden weg hochgeklappt ist.

Dank der erfindungsgemäßen Geräteeinbaudose kann für das jeweils ausgesuchte Montageverfahren die vierte Seitenwand entweder als Steg benutzt oder umgeklappt werden wobei in der umgeklappten Form der Zugang zum Inneren der Dose erheblich erleichtert wird.

Die Erfindung wird nun an Hand von Ausführungsbeispielen näher erläutert, die nicht einschränkenden Beispielen darstellen, dies im Zusammenhang mit den anliegenden folgenden schematischen Figuren.

Es zeigen:
Fig. 1a, b eine perspektivische Ansicht einer Ausführungsform der erfindungsgemäßen Geräteeinbaudose (ohne Elektro-Einbaugerät) mit stehendem vertikalen Steg, bzw. mit umgeklapptem Steg;
Fig. 2a, b eine vordere Ansicht des Objekts der Fig. 1a bzw. der Fig 1b; und
Fig. 3a, b eine Draufsicht des Objekts der Fig. 1a bzw. der Fig. 1b.

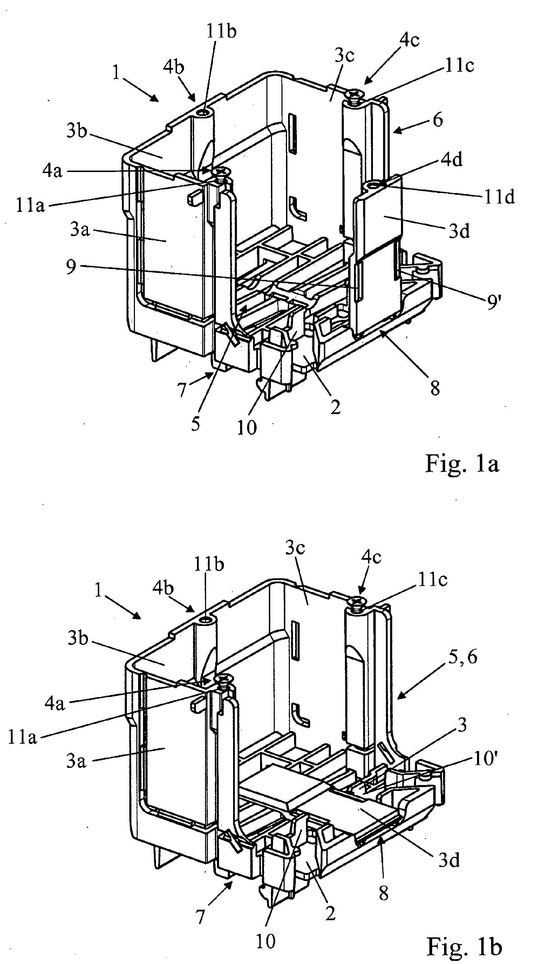

Wie in den Figuren 1a und 1b vereinfacht illustriert, betrifft die vorliegende Erfindung eine Geräteeinbaudose für Kabelkanäle, im wesentlichen umfassend
- ein oben offenes Gehäuse 1 mit einem Boden 2 und drei Seitenwänden 3a, 3b, 3c die zusammen, von oben gesehen eine C-, J- oder U-artige Form aufweisen und welche jeweils Mittel 4a, 4b, 4c zum Befestigen eines Elektro-Einbaugerätes besitzen,
- mindestens eine, vorzugsweise zwei Kabeleinführungsöffnungen 5, 6,
- und mindestens eine, am Boden 2 außenseitig angebrachte Haltevorrichtung 7 zur Befestigung des Gehäuses 1 am Kabelkanal (nicht dargestellt),
dadurch gekennzeichnet, dass
- die vierte Seitenwand 3d, als ein zum Inneren des Gehäuses 1 hin, am Boden 2 schwenkbar angebrachter, umklappbarer Steg ausgebildet ist, der an seinem oberen freien Ende mindestens ein Mittel 4d aufweist das zumindest mit einem, auf der gegenüberliegenden Seitenwand 3b liegenden Mittel 4b zur besagten Befestigung kooperieren kann wenn der Steg senkrecht vom Boden 2 weg hochgeklappt ist.

In der Regel werden symmetrische Dosen bzw. Ausfertigungen stark bevorzugt. Wie im dargestellten Beispiel, besitzt die erfindungsgemäße Dose vorzugsweise eher ein Gehäuse 1, in dem die drei benachbarten und verbundenen sich folgenden Seitenwände 3a, 3b, 3c eine von oben gesehen eine C-artige Form bilden, wobei die zwei Ecken zwischen den vertikalen Seitenwänden 3a, 3b bzw. 3b, 3c, praktischerweise abgerundet werden können.

Je nach Länge der seitlichen Seitenwände 3a bzw. 3c kann diese C-artige Form auch eher in eine U oder J-artige Form umgewandelt werden. Die vierte komplementäre Wand 3d, die die quadratartige (von oben bzw. der Seite gesehen) Dose bildet ist erfindungsgemäß als vertikaler Steg oder vierte Teil-seitenwand ausgebildet. Die Breite und Höhe der vierten Wand 3d sind auf jeden Fall so bemessen, dass sie immer ein komplettes Zurückklappen der vierten Wand 3d ins Innere des Gehäuses 1 ermöglichen. Bei dem auf den Figuren dargestellten Beispiel beträgt die Breite der vierte Wand 3d, die nicht mit den anderen drei Seitenwänden 3a, 3b und 3c verbunden ist, nur etwa ein Drittel der Breite der gegenüberliegenden Seitenwand 3b, während die zwei anderen Seitenwänden 3a und 3c beide etwa nur die hälfte der Breite der gegenüberliegenden Seitenwand 3b als Breite aufweisen. Alle vier Seitenwände 3a, 3b, 3c und 3d haben vorzugsweise, die gleiche Höhe oder zumindest sind sie so gestaltet, dass die notwendigen Mittel 4a, 4b, 4c, und 4d in der gleichen Ebene auf der gleichen Höhe liegen, so dass sich das Elektrogerät, insbesondere durch einen in der Regel quadratischen Rahmen, z. B. aus Metall, auf das Gehäuse 1 fixieren läßt. Dazu kann z. B. der Rahmen auf das Gehäuse geschraubt werden, wie es in einer besonders bevorzugten Variante später beschrieben wird und wie man es von den Figuren her schon von den angedeuteten zwei Schrauben erahnen kann.

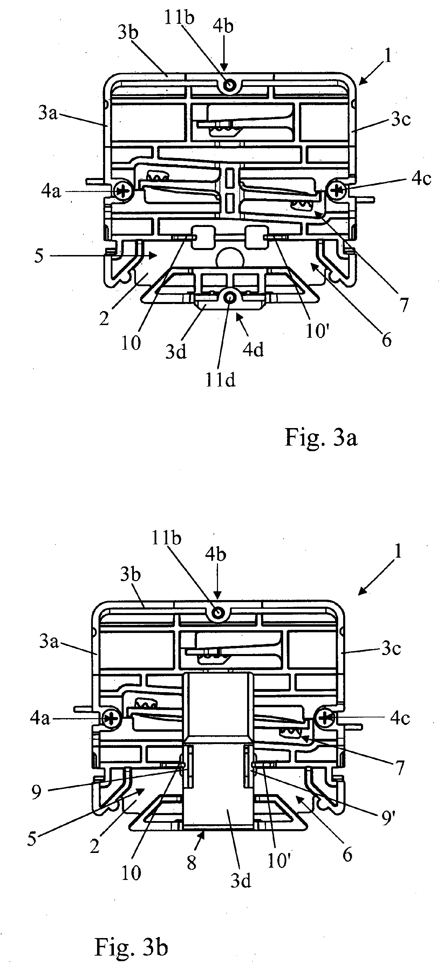

Wie auf den Figuren 1a, 1b und 3a, 3b besonders gut zu erkennen, ist auf jeden Fall genügend Platz zwischen den zwei lateralen Seitenwänden 3a, 3c und der vierten freien Seitenwand oder Steg 3d vorhanden um zumindest eine, vorzugsweise zwei Kabeleinführungsöffnungen 5, 6 zu bilden durch welche die Kabel ins Innere des Gehäuses 1 durchgeführt werden können um dort später mit dem montierten Elektrogerät angeschlossen zu sein.

Die erfindungsgemäße Geräteeinbaudose ist dadurch gekennzeichnet, dass der Steg am Boden 2 mit einem Filmscharnier 8 verbunden ist. Dieses Filmscharnier 8 kann die ganze Breite der Seitenwand 3d einnehmen oder nur punktweise z. B. wie dargestellt als zwei punktartige Verbindungen ausgebildet werden.

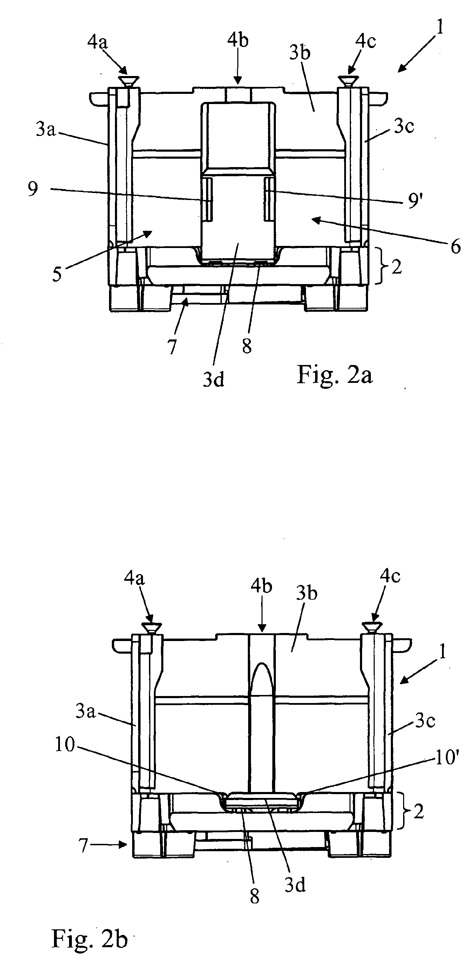

Dies ermöglicht das Zurückklappen der vierten Wand 3d bzw. des Steges. Wie z. B. auf der Fig. 2b zu erkennen, ist das Filmscharnier 8 am äußeren Rand des Bodens 2 befestigt. Somit kann die Seitenwand 3d bzw. der Steg komplett nach Innen in das Gehäuse 1 gekippt werden und von der vertikalen Stellung (90° zur Bodenebene) bis zu der auf der Fig. 3b sichtbaren horizontalen Stellung (0°). Alle Stellungen dazwischen sind theoretisch möglich, z. B. 45° wenn ein komplettes Wegklappen (insbesondere mit Einrasten) nicht gewünscht oder erforderlich sein sollte. Sollte die Seitenwand 3d bzw. der Steg nur zeitweise störend oder unbenutzt sein kann dieser nur ein wenig weggeklappt werden um später wieder in die aufrechte Haltung (90°) zurückgebracht werden wo er dann z. B. zur Fixierung dank des Mittels 4d verwendet wird, insbesondere als zusätzliche dritte Festigungsmöglichkeit bei Verwendung der zwei lateralen Mitteln 4a, 4c der entsprechenden lateralen Seitenwände 3a, 3c.

Alternativ kann die nicht benutzte Seitenwand 3d als Steg auch vom Boden definitiv abgetrennt werden, z. B. abgeschnitten oder einfach durch mehrmaliges umbiegen bis zur Trennung abgebrochen werden, da das Filmscharnier 8 aus nur wenig und relativ leichtbrüchigem Material besteht. Üblicherweise besteht das Filmscharnier 8 aus dem gleichen Material, insbesondere Kunststoff oder Verbundkunststoff wie alle anderen Teile des Gehäuses 1. Das Gehäuse 1 kann durch jedes übliche Gies- oder Spritz-giesverfahren serienmäßig hergestellt werden.

In einer bevorzugten Variante ist die erfindungsgemäße Geräteeinbaudose, dadurch gekennzeichnet, dass der Steg mindestens ein Rastmittel aufweist, das mit einem, im Boden 2 des Gehäuses 1 vorgesehenen, komplementärem Rastmittel zu einer Rastverbindung kooperiert.

Vorzugsweise und wie z. B. auf den Figuren 1a, 1b oder 3b schematisch angedeutet, ist die erfindungsgemäße Geräteeinbaudose ferner dadurch gekennzeichnet, dass der Steg zwei seitliche längliche Rastnuten 9, 9' aufweist, die mit zwei im Boden 2 des Gehäuses 1 vorgesehenen Rasthacken 10, 10' zu einer Rastverbindung kooperieren. Diese Lösung ist besonders günstig, da diese Teile direkt bei der Herstellung des Gehäuses 1 gebildet werden können indem die entsprechende Formen (Vorspünge und Ausnehmungen, usw.) direkt in der Giesform vorgesehen werden. Somit läßt sich das Gehäuse 1 einfach aus einem einzigen Teil bilden und weitere Einzelteile oder zusätzliche Montageschritte werden einfach vermieden.

Das Gleiche gilt für die am Boden 2 außenseitig angebrachte Haltevorrichtung 7 zur Befestigung des Gehäuses 1 am nicht dargestellten Kabelkanal. Diese an sich bekannten Haltevorrichtungen arbeiten wie elastische Rastelemente, die sich auf eine zentrale Schiene des Kabelkanals einfach aufstecken lassen und das Gehäuse 1 dort der Schiene entlang gleiten lassen.

Die Lösung der Rastnuten 9, 9' mit den Rasthacken 10, 10' ermöglicht eine einfache und feste (falls gewünscht sogar eine reversibele) Verbindung die nur einmal betätigt werden muss um die Seitenwand 3d oder den Steg im Boden 2 festzuhalten.

Wie schon oben erwähnt und gemäß einem weiteren Merkmal, bestimmen die Breiten der beiden sich gegenüberstehenden freistehenden Seitenwände 3a, 3c und die Breite der vierten Seitenwand 3d die Breiten der mindestens einen, vorzugsweise zwei Kabeleinführungsöffnungen 5, 6.

In einer bevorzugten Ausführungsform ist die erfindungsgemäße Geräteeinbaudose noch dadurch gekennzeichnet, dass die jeweiligen Mittel 4a, 4b, 4c, 4d der vier Seitenwände 3a, 3b, 3c, 3d zum Befestigen eines Elektro-Einbaugerätes als Gewindelöcher 11a, 11b, 11 c, 11d ausgebildet sind, die zumindest paarweise 11a, 11c bzw. 11b, 11d zur waagrechten und/oder senkrechten Befestigung durch Anschrauben des Elektro-Einbaugeräts kooperieren (siehe Fig. 1a).

Die Dicke der Seitenwände 3a, 3b, 3c, 3d ist zumindest an den Stellen wo die Mittel 4a, 4b, 4c, 4d vorhanden sind entsprechend stark, wie auf den Figuren deutlich zu erkennen.

Die anderen Bereiche dieser Wände können dünner ausgeführt werden um Material zu sparen.

Zweckmäßigerweise ist die erfindungsgemäße Geräteeinbaudose ebenfalls, dadurch gekennzeichnet, dass die Öffnungen zumindest zwei gegenüberliegenden, vorzugsweise alle Öffnungen der Gewindelöcher auf einer gleichen Höhe bzw. in einer gleichen Ebene der Seitenwänden 3a, 3b, 3c, 3d ausgebildet sind.

Auf der Figur 2a wurde die Höhe der vierten Seitenwand 3d etwas niedrieger als die Höhe der anderen Seitenwänden 3a, 3b, 3c gewählt. Die Öffnungen der Gewindelöcher 11a, 11b und 11c liegen dennoch in der gleichen Ebene. Die Tatsache, dass das vierte Gewindeloch 11 d etwas tiefer liegt kann z. B. mit einer entsprechend längeren Schraube ausgeglichen werden.

Es wird somit gewährleistet, dass das Elektro-Einbaugerät sicher und ordnungsgemäß montiert werden kann und, dass z. B. im Falle eines Metallrahmens der auf das Gehäuse 1 fixiert wird dieser vorzugsweise parallel zum Boden des Kabelkanals ausgerichtet ist.

In einer bevorzugten Form ist die erfindungsgemäße Geräteeinbaudose ebenfalls dadurch gekennzeichnet, dass der Boden 2 des Gehäuses 1 eine Ausnehmung aufweist die, die vierte Seitenwand 3d als umgeklappten Steg völlig aufnimmt, und in der Dicke des Bodens 2 so angebracht ist, dass der waagrechte umgeklappte Steg mit dem Rest des Bodens 2 fluchtet (siehe Fig. 1b und 2b).

Dank der vorliegenden Erfindung hat der Arbeiter für die Montage eine praktische Geräteeinbaudose, die einfach und preiswert herzustellen ist, und vor Ort einfach eingesetzt werden kann, um in kurzer Zeit und ohne Mühe eine sichere Montage und Verbindung eines Elektrogerätes sowohl in einer horizontalen so wie vertikalen Lage im Kanal zu ermöglichen.

Im nicht begrenzendem Beispiel, das auf den beiliegenden Figuren dargestellt ist können somit eins bis vier, jedoch bevorzugt je ein Paar Schrauben benützt werden um das nicht dargestellte Elektro-Einbaugerät am Gehäuse 1 zu fixieren. Je nach Ausrichtung des besagten Elektro-Einbaugerätes in der quadrat-förmigen Dose können z. B. die Schrauben als gegenüberliegende Mittel 4a, 4c auf den lateralen Seitenwänden 3a, 3c (Fig. 3b) und/oder die gegenüberliegenden Mittel 4b, 4d der zwei anderen Seitenwände 3b, 3d benützt werden (siehe Fig. 3a).

In der Position der Figur 3b kann eine horizontale (waagrechte) Montage durch die angedeuteten Schrauben (bei 4a, 4c), bei der Figur 3a eine horizontale und/oder vertikale (senkrechte) Montage durch die Mittel 4a, 4c und/oder 4b, 4d vorgenommen werden.

Je nach Beschaffenheit des Elektro-Einbaugerätes kann Letzteres in der passenden, gewünschten oder praktischen, vertikalen oder horizontalen Richtung dank des erfindungsgemäßen Gehäuses 1 problemlos montiert werden.

Bei Bedarf kann die vierte Seitenwand 3d oder Steg einfach abgebrochen oder in das Gehäuse 1 weggeklappt werden, wo es im Boden 2 untergebracht sein kann (Fig. 2b) und somit noch weniger stört oder stehen bleiben um ggf. noch ein zusätzliches Mittel 4d anzubieten um das Elektro-Einbaugerät zu befestigen. Dieses kann also zumindest über zwei gegenüberliegenden Mittel 4a, 4c (Fig. 3b) bzw. 4b, 4d (Fig. 3a) am Gehäuse 1 befestigt werden, oder über drei oder sogar vier Mittel 4a, 4b, 4c, 4d der drei oder vier Seitenwänden 3a, 3b, 3c, 3d je nach Kombination mit oder ohne dem Mittel 4d der vierten Seitenwand 3d (bei stehendem vertikalen Steg) befestigt werden.

Die erfindungsgemäße Geräteeinbaudose bringt insbesondere folgende Vorteile mit sich:
- ein umklappbarer Steg zum einfachen Anschluß von z. B. mehrfach-Datendosen;
- eine Montage durch Einrasten in den Kabelkanal wie bei herkömmlichen Dosen;
- eine leichte Demontage mittels Schraubendreher;
- ein erhöhter Halt im Kanal;
- alle Vorteile in einer einzigen Dose;
- ein deutliches, wertiges Einrastgeräusch.

Selbstverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens der Ansprüche bleiben, jederzeit möglich.

## Patentansprüche

1. Geräteeinbaudose für Kabelkanäle, im wesentlichen umfassend
- ein oben offenes Gehäuse (1) mit einem Boden (2) und drei Seitenwänden (3a, 3b, 3c) die zusammen, von oben gesehen eine C-, J- oder U-artige Form aufweisen und welche jeweils Mittel (4a, 4b, 4c) zum Befestigen eines Elektro-Einbaugerätes besitzen,
- mindestens eine, vorzugsweise zwei Kabeleinführungsöffnungen (5, 6),
- und mindestens eine, am Boden (2) außenseitig angebrachte Haltevorrichtung (7) zur Befestigung des Gehäuses (1) am Kabelkanal,
- eine vierte Seitenwand (3d) die als ein schwenkbar angebrachter, umklappbarer Steg ausgebildet ist, der an seinem oberen freien Ende mindestens ein Mittel (4d) aufweist das zumindest mit dem, auf der gegenüberliegenden Seitenwand (3b) liegenden Mittel (4b) zur besagten Befestigung kooperieren kann wenn der Steg senkrecht vom Boden (2) weg hochgeklappt ist, **dadurch gekennzeichnet, dass** die vierte Seitenwand (3d), als ein zum Inneren des Gehäuses (1) hin, am Boden umklappbarer Steg ausgebildet ist.

2. Geräteeinbaudose nach Anspruch 1, **dadurch gekennzeichnet, dass** der Steg am Boden (2) mit einem Filmscharnier (8) verbunden ist.

3. Geräteeinbaudose nach Anspruch 1 oder 2, **dadurch gekennzeichnet, dass** der Steg mindestens ein Rastmittel aufweist, das mit einem, im Boden (2) des Gehäuses (1) vorgesehenen, komplementärem Rastmittel zu einer Rastverbindung kooperiert.

4. Geräteeinbaudose nach Anspruch 3, **dadurch gekennzeichnet, dass** der Steg zwei seitliche längliche Rastnuten (9, 9') aufweist, die mit zwei im Boden (2) des Gehäuses (1) vorgesehenen Rasthacken (10, 10') zu einer Rastverbindung kooperieren.

5. Geräteeinbaudose nach einem der Ansprüche 1 bis 4, **dadurch gekennzeichnet, dass** die Breiten der beiden sich gegenüberstehenden freistehenden Seitenwände (3a, 3c) und die Breite der vierten Seitenwand (3d) die Breiten der mindestens einen, vorzugsweise zwei Kabeleinführungsöffnungen (5, 6) bestimmen.

6. Geräteeinbaudose nach einem der Ansprüche 1 bis 5, **dadurch gekennzeichnet, dass** die jeweiligen Mittel (4a, 4b, 4c, 4d) der vier Seitenwände (3a, 3b, 3c, 3d) zum Befestigen eines Elektro-Einbaugerätes als Gewindelöcher (11a, 11b, 11c, 11d) ausgebildet sind, die zumindest paarweise (11a, 11d) bzw. (11b, 11c) zur waagrechten und/oder senkrechten Befestigung durch Anschrauben des Elektro-Einbaugeräts kooperieren.

7. Geräteeinbaudose nach Anspruch 6, **dadurch gekennzeichnet, dass** die Öffnungen zumindest zwei gegenüberliegenden, vorzugsweise alle Öffnungen der Gewindelöcher (11a, 11b, 11c, 11d) auf einer gleichen Höhe bzw. in einer gleichen Ebene der Seitenwänden (3a, 3b, 3c, 3d) ausgebildet sind.

8. Geräteeinbaudose nach einem der Ansprüche 1 bis 7, dadurch gekennzeichet, dass der Boden (2) des Gehäuses (1) eine Ausnehmung aufweist die, die vierte Seitenwand (3d) als umgeklappten Steg völlig aufnimmt, und in der Dicke des Bodens (2) so angebracht ist, daß der waagrechte umgeklappte Steg mit dem Rest des Bodens (2) fluchtet.

## Claims

1. Device installation socket for cable conduits, substantially comprising
- a housing (1) which is open at the top and has a base (2) and three side walls (3a, 3b, 3c) which together have a C-, J- or U-like shape, as seen from above, and which each have means (4a, 4b, 4c) for the fastening of an electric installation device,
- at least one, preferably two cable insertion openings (5, 6),
- and at least one holding device (7) which is attached on the outer side of the base (2) and is intended for fastening the housing (1) on the cable conduit,
- a fourth side wall (3d) which is designed as a pivotably attached web which can be folded over and which has, at its upper free end, at least one means (4d) which can cooperate at least with the means (4b) located on the opposite side wall (3b) for said fastening when the web is folded upwards vertically away from the base (2), **characterized in that** the fourth side wall (3d) is designed as a web which can be folded over on the base towards the interior of the housing (1).

2. Device installation socket according to Claim 1, **characterized in that** the web is connected on the base (2) to a film hinge (8).

3. Device installation socket according to Claim 1 or 2, **characterized in that** the web has at least one latching means which cooperates with a complementary latching means provided in the base (2) of the housing (1) to form a latching connection.

4. Device installation socket according to Claim 3, **characterized in that** the web has two lateral oblong latching grooves (9, 9') which cooperate with two latching hooks (10, 10') provided in the base (2) of the housing (1) to form a latching connection.

5. Device installation socket according to one of Claims 1 to 4, **characterized in that** the width of the two opposite, free-standing side walls (3a, 3c) and the width of the fourth side wall (3d) determine the width of the at least one, preferably two cable insertion openings (5, 6).

6. Device installation socket according to one of Claims 1 to 5, **characterized in that** the respective means (4a, 4b, 4c, 4d) of the four side walls (3a, 3b, 3c, 3d) for the fastening of an electric installation device are designed as threaded holes (11a, 11b, 11c, 11d) which cooperate at least in pairs (11a, 11d) or (11b, 11c) for the horizontal and/or vertical fastening by the electric installation device being screwed on.

7. Device installation socket according to Claim 6, **characterized in that** the openings of at least two opposite threaded holes, preferably all of the openings of the threaded holes (11a, 11b, 11c, 11d), are formed at an identical height or in an identical plane of the side walls (3a, 3b, 3c, 3d).

8. Device installation socket according to one of Claims 1 to 7, **characterized in that** the base (2) of the housing (1) has a recess which completely accommodates the fourth side wall (3d) as the folded-over web, and is provided in the thickness of the base (2) in such a manner that the horizontal folded-over web is aligned with the rest of the base (2).

## Revendications

1. Boîte encastrable pour appareils destinée à des caniveaux de câbles, comprenant pour l'essentiel
- un boîtier (1) ouvert vers le haut, avec un fond (2) et avec trois parois latérales (3a, 3b, 3c) qui forment ensemble en vue de dessus un genre de forme de C, de J ou de U et qui possèdent des moyens respectifs (4a, 4b, 4c) pour la fixation d'un appareil électrique encastrable,
- au moins une et de préférence deux ouvertures (5, 6) d'introduction de câbles,
- et au moins un dispositif de maintien (7), installé du côté extérieur sur le fond (2), pour la fixation du boîtier (1) sur le caniveau de câbles,
- une quatrième paroi latérale (3d) qui est réalisée sous la forme d'une branche rabattable montée à pivotement, qui présente à son extrémité libre supérieure au moins un moyen (4d) qui, lorsque la branche est relevée à la verticale en éloignement du fond (2), peut coopérer pour ladite fixation au moins avec le moyen (4b), situé sur la paroi latérale opposée (3b),
**caractérisée en ce que** la quatrième paroi latérale (3d) est réalisée sous la forme d'une branche rabattable sur le fond en direction de l'intérieur du boîtier (1).

2. Boîte encastrable pour appareils selon la revendication 1, **caractérisée en ce que** la branche est reliée au fond (2) par une charnière pelliculaire (8).

3. Boîte encastrable pour appareils selon la revendication 1 ou 2, **caractérisée en ce que** la branche présente au moins un moyen d'enclenchement qui coopère pour une liaison par enclenchement avec un moyen d'enclenchement complémentaire prévu dans le fond (2) du boîtier (1).

4. Boîte encastrable pour appareils selon la revendication 3, **caractérisée en ce que** la branche présente deux rainures d'enclenchement (9, 9') latérales et oblongues, qui coopèrent pour une liaison par enclenchement avec deux crochets d'enclenchement (10, 10') prévus dans le fond (2) du boîtier (1).

5. Boîte encastrable pour appareils selon l'une des revendications 1 à 4, **caractérisée en ce que** les largeurs des deux parois latérales indépendantes (3a, 3b) mutuellement opposées et la largeur de la quatrième paroi latérale (3d) déterminent les largeurs de l'au moins une et de préférence des deux ouvertures (5, 6) d'introduction de câbles.

6. Boîte encastrable pour appareils selon l'une des revendications 1 à 5, **caractérisée en ce que** les moyens respectifs (4a, 4b, 4c, 4d) des quatre parois latérales (3a, 3b, 3c, 3d) pour la fixation d'un appareil électrique encastrable sont réalisés sous la forme de trous taraudés (11a, 11 b, 11c, 11d), qui coopèrent au moins par paires, respectivement (11a, 11d) ou (11b, 11c), pour la fixation horizontale et/ou verticale par vissage de l'appareil électrique encastrable.

7. Boîte encastrable pour appareils selon la revendication 6, **caractérisée en ce que** les ouvertures d'au moins deux trous taraudés opposés, et de préférence toutes les ouvertures des trous taraudés (11a, 11b, 11c, 11d), sont réalisées à une même hauteur ou encore dans un même plan des parois latérales (3a, 3b, 3c, 3d).

8. Boîte encastrable pour appareils selon l'une des revendications 1 à 7, **caractérisée en ce que** le fond (2) du boîtier (1) présente un évidement qui reçoit totalement la quatrième paroi latérale (3d) sous la forme d'une branche rabattue, et qui est installé dans l'épaisseur du fond (2) de telle sorte que la branche rabattue horizontale est alignée avec le reste du fond (2).
